# EUROPEAN PATENT APPLICATION

(11) **EP 4 604 264 A1**
(43) Date of publication of application: **20.08.2025**
(21) Application number: 23877487.1
(22) Date of filing: 04.09.2023
(51) Int. Cl.: H01M 10/54, C22B 23/02, C22B 7/00

(54) **METHOD FOR RECYCLING WASTE BATTERIES**

(30) Priority: 12.10.2022 KR 20220130603
(71) Applicant: POSCO Holdings Inc., Seoul 06194 (KR); POSCO Co., Ltd, Pohang-si, Gyeongsangbuk-do 37859 (KR)
(72) Inventor: HAN, Sangwoo, Seoul 06194 (KR); LEE, Juseung, Seoul 06194 (KR); KIM, Wanyi, Seoul 06194 (KR); PARK, Joongkil, Seoul 06194 (KR); YOU, Kisung, Seoul 06194 (KR)
(74) Representative: Pfenning, Meinig & Partner mbB
(86) International application number: PCT/KR2023/013196
(87) International publication number: WO 2024/080557

(57) **Abstract**

The present disclosure provides a method of recycling a waste battery, the method including: introducing and charging waste battery raw materials; heating the introduced and charged waste battery raw materials; cooling the heat-treated products; and discharging the cooled reactants, wherein in the introducing and charging of the waste battery raw materials, a weight ratio of carbon/nickel in the charged raw materials is 20 wt% or more.

## Description

### [Technical Field]

The present disclosure relates to a method of recycling a waste battery, and in particular, to a method of performing a high-temperature reduction heat treatment for recycling a waste battery.

### [Background Art]

In accordance with an increase in demand for electric vehicles worldwide, the issue of disposal of waste batteries from the electric vehicles is emerging as a social problem. In the case of lithium secondary batteries, which are the main raw materials of the waste batteries, an organic solvent, an explosive substance, and heavy metal materials such as Ni, Co, Mn, and Fe are contained; however, in the case of Ni, Co, Mn, and Li having great scarcity value as valuable metals, a recovery and recycling process after the lithium secondary batteries are discarded is emerging as an important research field.

For the general recycling of the waste batteries, black powder in which cathode materials and anode materials are mixed is extracted through a process of crushing, pulverizing, gravity sorting, and magnetic sorting the waste batteries that have reached the end of their lifespan.

The black powder contains, for example, nickel, cobalt, manganese, lithium, aluminum, and an oxide of oxygen as cathode materials, graphite as an anode material, a mixture thereof, and some impurities such as aluminum and copper. As a method of recovering valuable metals from the black powder, a wet process and a dry process are mainly used.

In the wet process, NiSO₄, CoSO₄, MnSO₄, and Li₂CO₃ are produced through leaching, solvent extraction, and lithium production. In a case where the black powder is processed using the wet process, graphite, which is the anode material contained in the black powder, does not dissolve in a strong acid atmosphere, which causes an excessively long leaching process time, and the black powder is separated together with the graphite, which causes a decrease in actual yield.

However, the dry process is a process of removing aluminum from a slag through a high-temperature dry process using the black powder, and in the dry process, a Ni-Co-Mn-C alloy may be produced. In the dry process, Ni-Mn-Li-Al-O oxides in the black powder are reduced at a high temperature using graphite and oxygen injection at a high temperature, for example, in a range of 1,400 to 1,600°C so as to generate CO or CO₂ gas, and therefore, a Ni-Co-Mn alloy and lithium and aluminum in the slag may be removed.

Thereafter, the separated Ni-Co-Mn alloy may also be subjected to the wet process. Through the leaching-solvent extraction process in the wet process, NiSO₄, CoSO₄, and MnSO₄ are produced and carbon is dissolved in the alloy, and therefore, a leaching process time is reduced by about 70% compared to the wet process.

In order to subject the reduced alloy to the wet process again, the alloy particle size should be below a certain size, but in the current existing process, the alloy particle size is set to be smaller by subjecting the reduced molten alloy to water atomization. However, the water atomization used in the case incurs significant process costs.

### [Disclosure]

### [Technical Problem]

The present disclosure has been made in an effort to provide a method for controlling a size of a Ni-based alloy when recovering valuable metals in a waste battery.

An alloy having an appropriate size is easy to separate from C, and the efficiency is increased when melting the Ni alloy in sulfuric acid or the like in a post-processing process.

### [Technical Solution]

An exemplary embodiment of the present disclosure provides a method of recycling a waste battery, the method including: introducing and charging waste battery raw materials; heating the introduced and charged waste battery raw materials; cooling the heat-treated products; and discharging the cooled reactants, wherein in the introducing and charging of the waste battery raw materials, a weight ratio of carbon/nickel in the charged raw materials is 20 wt% or more.

The weight ratio of carbon/nickel in the charged raw materials may be 50 wt% or more and 200 wt% or less.

The obtained reactants may have a particle size of 3,000 µm or less.

The obtained reactants may have a particle size of 75 to 1,000 µm.

An average particle size (D50) of the obtained reactants may be 250 ± 50 µm.

In the heating of the introduced and charged waste battery raw materials, the amount of oxygen in a furnace may be 0.5 vol% or less.

In the heating of the introduced and charged waste battery raw materials, a carbon weight reduction rate in the waste battery raw materials may be in a range of 20 ± 5 wt%.

In the heating of the introduced and charged waste battery raw materials, a heating temperature may be 1,050 to 1,300°C.

In the heating of the introduced and charged waste battery raw materials, a reaction time may be 30 minutes or longer and 240 minutes or shorter.

### [Advantageous Effects]

According to the present disclosure, it is possible to prevent the generation of a large amount of carbon dioxide generated during the existing dry process of valuable metals oxidized after crushing a lithium ion battery or a battery for a vehicle, which may greatly contribute to reducing global warming-related pollution.

In addition, the size of the alloy required for a subsequent process may be controlled, and the overall process cost and time may be saved.

### [Description of the Drawings]

FIG. 1 illustrates thermodynamic data for a solid solubility of carbon according to a temperature of nickel.
FIG. 2 illustrates particle size formation data and optical photographs of an alloy according to a C/Ni ratio.
FIG. 3 illustrates the results of evaluating a carbon weight reduction rate according to a content of oxygen.
FIG. 4 illustrates particle size distribution data and optical photographs of the obtained alloy according to a reaction time.

### [Mode for Invention]

Terminologies used herein are to mention only a specific exemplary embodiment, and are not to limit the present disclosure. Singular forms used herein include plural forms as long as phrases do not clearly indicate an opposite meaning. The term "comprising" used in the specification concretely indicates specific properties, regions, integers, steps, operations, elements, and/or components, and is not to exclude the presence or addition of other specific properties, regions, integers, steps, operations, elements, and/or components.

Unless defined otherwise, all terms including technical terms and scientific terms used herein have the same meanings as understood by those skilled in the art to which the present disclosure pertains. Terms defined in a generally used dictionary are additionally interpreted as having the meanings matched to the related technical document and the currently disclosed contents, and are not interpreted as ideal or very formal meanings unless otherwise defined.

Hereinafter, exemplary embodiments of the present disclosure will be described in detail. However, these exemplary embodiments are provided as examples, and the present disclosure is not limited by these exemplary embodiments and is defined by only the scope of the claims to be described below.

The present disclosure provides a method for controlling a size of a Ni-based alloy when recovering valuable metals in a waste battery. Specifically, a C/Ni ratio in an initial input is presented.

The Ni-based alloy has little wettability with C in a molten state and is thus formed into spherical particles, and in the case, the particle size of the alloy may be controlled using a temperature, an oxygen range, and a reaction time required for a high-temperature reaction.

An alloy having an appropriate size is easy to separate from C, and the efficiency is increased when melting the Ni alloy in sulfuric acid or the like in a post-processing process.

Valuable metals in the waste battery include Ni, Co, Mn, Cu, Al, Li, and the like, and in the present disclosure, it is intended to control a particle size of a Ni-based alloy.

The Ni-based alloy may contain Co, Mn, Cu, and Li as main components, and may contain trace amounts of impurity elements such as Fe, Na, K, Mg, Cl, Si, and Ca. In order to prepare a Ni-based alloy, a reduction process of removing oxygen from a Ni-Co-Mn oxide present in the existing waste battery is required.

In this case, in the present disclosure, reduction using C as a reducing agent is intended to be performed.

Here, C may play the following three roles: being used as a reducing agent as described above, controlling a particle size using a difference in wettability, and lowering a melting point by penetrating into the Ni-based alloy.

In the present disclosure, a process of producing reactants is performed in the following order: introduction of battery raw materials → high-temperature reaction → cooling → recovery of reactants.

Here, the reactants may be based on Ni, may contain Co, Mn, C, Cu, Al, Li, and the like, and may be partially present in the form of compounds such as oxides containing oxygen, fluorides containing fluorine in an electrolyte, and carbon or carbon compounds that do not participate in the reduction.

In terms of the introduction of the battery raw materials, all Ni-based batteries may be used, where C includes other introduced C in addition to C contained as an anode material. As described above, C serves as a reducing agent, and the Ni-based alloy produced at a high temperature has a difference in wettability with C, and therefore, the Ni-based alloy is formed into a spherical shape after melting.

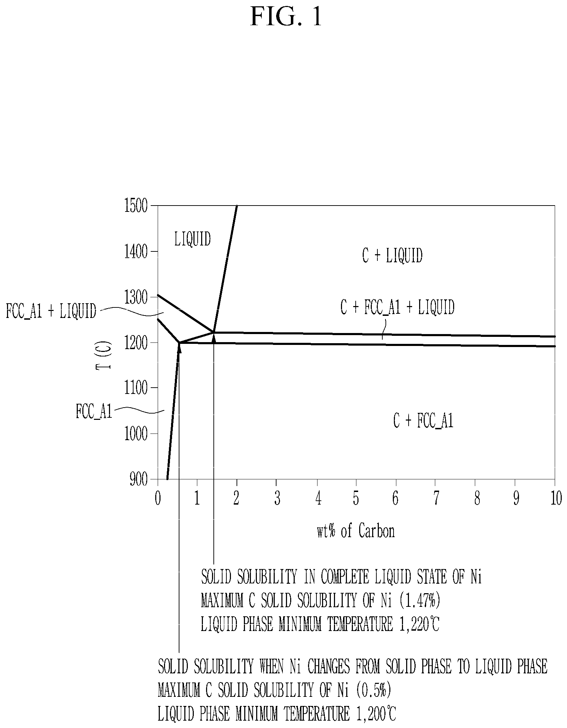

Referring to the thermodynamic data of FIG. 1, during a process of changing from a solid phase to a liquid phase of Li, a maximum thermodynamic C solid solubility of 0.5% is obtained based on Ni, and at a higher temperature, a change occurs in a liquid phase of Ni, a higher C solid solubility may be obtained.

In the present disclosure, a significant amount of C is present around Ni, and thus, particles may be formed when a C/Ni ratio in the raw materials is at a level of 20%. Subsequently, a content of C in the alloyed particles is evaluated at a level of 0.1%.

To this end, the C/Ni ratio should be controlled from the initial battery raw materials before being introduced. The following table shows the results of testing and evaluating the size of the produced alloy according to a content of C/Ni.

**[Table 1]**

| | | | | | | |
|---|---|---|---|---|---|---|
| C/Ni (wt%) | 5 or less | 5 to 20 | 20 to 50 | 50 to 150 | 150 to 200 | 200 or more |
| Process temperature (°C) | 1,250 | | | | | |
| Crushed product average size (mm) | 20 mm | | | | | |
| Holding time at 1,050°C or higher (min) | 60 | | | | | |
| Oxygen (%) | < 0.5 | | | | | |
| Alloy size (µm) | Lump (> 5,000) | Powder particles 500 to 3,000 | Powder particles 200 to 2,000 | Powder particles 75 to 1,000 | | |

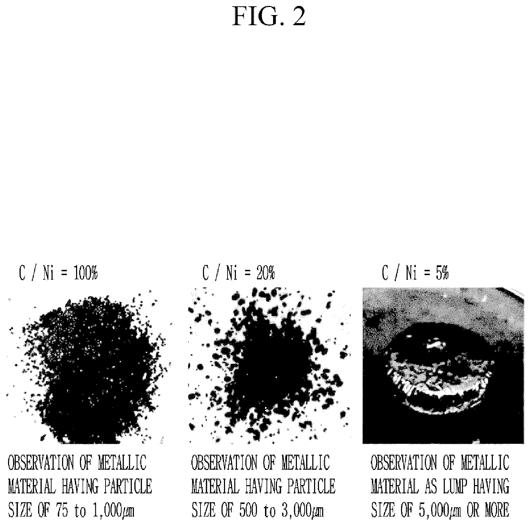

FIG. 2 illustrates particle size formation data and photographs of an alloy according to a C/Ni ratio.

In the test, the process temperature was set to 1,250°C, the crushed product average size was set to 20 mm, the holding time at 1,050°C or higher was set to 60 minutes, and oxygen was maintained 0.5% or less.

When the C/Ni ratio was 5 wt% or less, the alloy was present in the form of a lump of 5,000 µm or more, and when the C/Ni ratio was 20 wt% or more, the alloy was present in the form of powder particles.

In particular, as the C/Ni ratio increased, the powder particle size tended to decrease. In order to perform an acid treatment in a subsequent process, it is preferable to form particles of 500 µm or less, which is the best size, but particles of 3,000 µm or less may also be used, and the present disclosure proposes a C/Ni ratio of 20% or more. The best C/Ni ratio is 50% or more.

Additionally, the amount of oxygen in a furnace was changed over time during a high-temperature reaction at 1,250°C, and the amount of carbon consumed was measured.

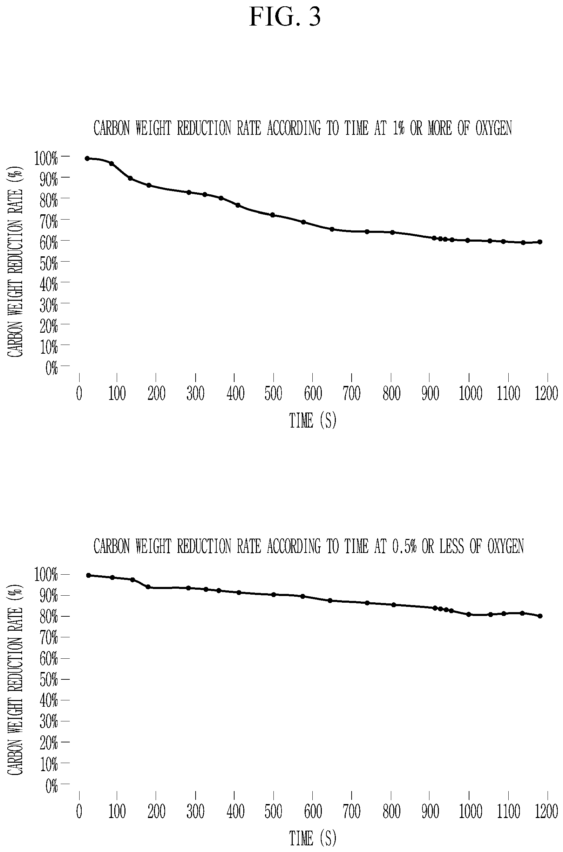

FIG. 3 illustrates the results of evaluating a carbon weight reduction rate according to a content of oxygen.

A content of oxygen in an alumina crucible was controlled to 1 vol%, and oxidized NCM, carbon, an electrolyte, and a separator were all contained in the crushed product. In this case, the ratios of the component contents are as shown in Table 2.

**[Table 2]**

| Crushed product composition DATA | | |
|---|---|---|
| Name | Component | Composition ratio (wt%) |
| Cathode material | Cathode | 30.8 |
| Anode material | Graphite | 19.9 |
| Conductive agent | Carbon black | 2.1 |
| Binder | Binder: PVDF | 2.8 |
| Current collector | Copper | 15.3 |
| | Aluminum | 8.0 |
| PE, PP, PET | C₂H₂ | 4.4 |
| LiPF₆ | | 2.1 |
| Solvent | C₃H₄O₃ | 12.0 |
| PVDF | C₂H₂F₂ | 2.8 |
| TOTAL | | 100 |

In the reaction test, a weight change inside the crucible containing the reactants was measured at a high temperature. At this time, the weight reduction in the reactants was evaluated based on the form in which carbon and oxygen were brought into contact with each other and converted to carbon dioxide or carbon monoxide and then emitted as gas.

As illustrated in FIG. 3, in the reaction test, it was determined that, when the reaction was performed at 1 vol% or more of oxygen measured at the top, as the weight reduction rate was reduced by about 40 wt%, most of the substances that could be gasified inside were converted into carbon monoxide and carbon dioxide.

At this time, the air conditions inside the reactor include carbon monoxide, carbon dioxide, nitrogen, argon, carbon-hydrogen gas, and hydrogen fluoride, in addition to vol% of oxygen.

However, when upper layer introduction was performed with a content of internal oxygen of 0.5 vol% or less, the weight reduction rate was about 20%. The weight reduction rate that occurred at this time was determined to be due to the electrolyte and separator being vaporized and converted into hydrocarbon-based gas.

Using the above results, it was confirmed that there was no limitation on the process time when the content of oxygen in the furnace was 0.5 vol% or less, but in a case where the process time in the furnace was prolonged when the oxygen content was 1% or more, a change in C/Ni occurred due to the reaction between carbon and oxygen.

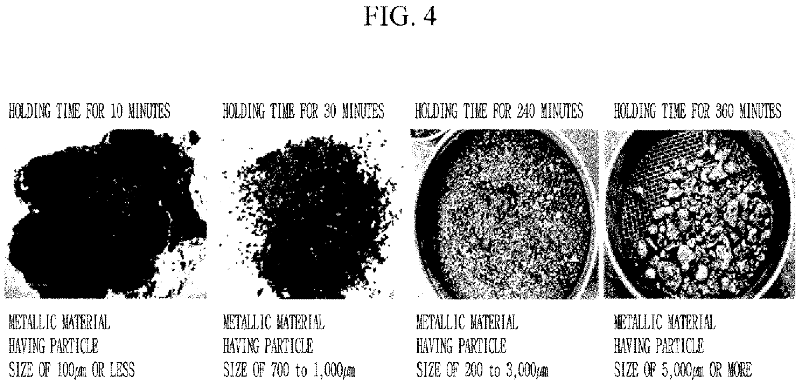

In additional tests, the process holding time at 1,050°C or higher was evaluated. The results are shown in Table 3 and FIG. 4.

**[Table 3]**

| | | | | | | |
|---|---|---|---|---|---|---|
| Holding time at 1,050°C or higher (min) | 10 or shorter | 30 | 60 | 12 | 240 | 360 or longer |
| Process temperature (°C) | 1,250 | | | | | |
| Crushed product average size (mm) | 20 mm | | | | | |
| C/Ni (wt%) | 100 | | | | | |
| Oxygen (%) | < 0.5 | | | | | |
| Alloy size (µm) | Powder particles < 100 | Powder particles 75 to 1,000 | | Powder particles 100 to 2,000 | Powder particles 200 to 3,000 | Lump > 5,000 |

Within 10 minutes, reduction into a significantly fine particulate metallic material was achieved, but the particle size was too small, and it was difficult to measure the particle size and magnetically separate carbon from other substances.

When the process time was from 30 to 240 minutes, a Ni-based alloy having a size of about 75 to 3,000 µm was formed, but when the process time exceeded 360 minutes, most alloys of 5,000 µm or more were formed.

It was determined from these results that the C/Ni ratio may have decreased as the weight reduction of carbon occurred over a long period of time even under low oxygen conditions, and the particles of the molten alloy may have lumped together over time and the size of the alloy increased.

Although the preferred exemplary examples have been described in detail above, the scope of the present disclosure is not limited thereto, and various alternations and modifications by those skilled in the art using the basic concept defined in the following claims also fall within the scope of the present disclosure.

## Claims

1. A method of recycling a waste battery, the method comprising:
introducing and charging waste battery raw materials;
heating the introduced and charged waste battery raw materials;
cooling the heat-treated products; and
discharging the cooled reactants,
wherein in the introducing and charging of the waste battery raw materials,
a weight ratio of carbon/nickel in the charged raw materials is 20 wt% or more.

2. The method of claim 1, wherein:
the weight ratio of carbon/nickel in the charged raw materials is 50 wt% or more and 200 wt% or less.

3. The method of claim 1, wherein:
the obtained reactants have a particle size of 3,000 µm or less.

4. The method of claim 1, wherein:
the obtained reactants have a particle size of 75 to 1,000 µm.

5. The method of claim 1, wherein:
an average particle size (D50) of the obtained reactants is 250 ± 50 µm.

6. The method of claim 1, wherein:
in the heating of the introduced and charged waste battery raw materials, the amount of oxygen in a furnace is 0.5 vol% or less.

7. The method of claim 6, wherein:
in the heating of the introduced and charged waste battery raw materials, a carbon weight reduction rate in the waste battery raw materials is in a range of 20 ± 5 wt%.

8. The method of claim 1, wherein:
in the heating of the introduced and charged waste battery raw materials, a heating temperature is 1,050 to 1,300°C.

9. The method of claim 8, wherein:
in the heating of the introduced and charged waste battery raw materials, a reaction time is 30 minutes or longer and 240 minutes or shorter.
